# EUROPEAN PATENT SPECIFICATION

(11) **EP 2 811 141 B1**
(45) Date of publication and mention of the grant of the patent: **21.06.2017**
(21) Application number: 13743218.3
(22) Date of filing: 10.01.2013
(51) Int. Cl.: F02G 1/055, F25B 29/00, F02G 1/043

(54) **LATENT HEAT EXCHANGER COVER PROVIDED WITH COOLING LINE**
LATENTE WÄRMETAUSCHERABDECKUNG MIT EINER KÜHLLEITUNG
CACHE D'ÉCHANGEUR DE CHALEUR LATENTE DOTÉ D'UNE CONDUITE DE REFROIDISSEMENT

(30) Priority: 30.01.2012 KR 20120009227
(43) Date of publication of application: 10.12.2014
(73) Proprietor: Kyungdong Navien Co., Ltd., Gyeonggi-do 450-818 (KR)
(72) Inventor: PARK, Dae Woong, Incheon 405-222 (KR); JANG, Duck Pyo, Seoul 139-888 (KR)
(74) Representative: Witzany, Manfred
(86) International application number: PCT/KR2013/000220
(87) International publication number: WO 2013/115500

(56) References cited:
- WO-A1-96/32572
- WO-A1-2004/102081
- WO-A1-2008/084228
- JP-A- 2003 240 373
- JP-A- 2003 278 506
- KR-A- 20080 063 312
- KR-A- 20090 067 760

## Description

### [Technical Field]

The present invention relates to a latent heat exchanger cover, and more specifically to a latent heat exchanger cover in which a cooling line is provided on one side of the latent heat exchanger cover of an auxiliary boiler that is equipped in a micro combined heat and power system, to prevent transfer from being transferred to exhaust gas that is passed through and emitted out of the latent heat exchanger, thereby minimizing heat loss of fluid flowing into the auxiliary boiler.

### [Background Art]

In recent years, increasing interest in discovery of new energy resources has led to increasing importance of circulating and reusing latent heat of middle and low temperature thermal energy, or cooling water, which are regarded as being created in almost all fields of the industry.

In general, organic rankine cycle is applied when converting middle and low temperature exhaust gas into high quality energy mechanical power.

Aforesaid organic rankine cycle is a type of power cycle that uses organic heating medium having higher air pressure than water as the moving fluid, and allows mechanical power to be obtained under conditions of low temperature heat sources with relative high heat efficiency.

For instance, known organic rankine cycle consists of a correlation of individual devices such as a circulation pump, a turbine, a condenser, and an evaporator. This creates a closed circulation cycle wherein a working fluid evaporates from the evaporator, after which mechanical power is generated as it expands in the turbine, followed by reliquefication in the condenser, and supplied again to the evaporator by the pump.

However, such known organic rankine system has a complicated configuration of the devices, requires a large quantity of organic heating mediums, and demands precise measurement of each requisite devices, thus presently there has been a problem of the system being difficult to actuate and stop.

Meanwhile, stirling engines are also known, in which each constituting element configuring the power cycle are assembled into a single engine, and gas such as air is used as the moving fluid. Therefore, it provides the benefit of the device being very simple with easy operation.

In addition, aforesaid stirling engine has greatest thermal efficiency among power cycles. Therefore, the stirling engine has a very simple structure compared to the conventional organic rankine system when converting middle and low temperature thermal energy to power, and also allows conversion of highly efficient energy.

### [Prior Art]

### [Patent Literature]

PCT Application WO 96/32572 is the closest state of the art according to the present invention. This document discloses a latent heat exchanger cover provided in a micro combined heat and power system. This micro combined heat and power system comprises a stirling engine being heated by an engine burner to produce electricity. Additionally it comprises an auxiliary boiler provided above the stirling engine and being equipped with a sensible heat exchanger and a latent heat exchanger. The boiler and both heat exchangers are intended to produce hot water. Additionally a cooling line is provided, separating hot exhaust gas and cold exhaust gas such that heat exchange between these two exhaust gas flows is prevented.

(Patent Literature 1) Patent Application No. 10-2010-79470

### [Disclosure of Invention]

### [Technical Problem]

The aforementioned patent literature is an invention previously filed by the same applicant and is directed to an emission structure of an engine exhaust passage in a micro combined heat and power system comprising a stirling engine and an auxiliary boiler, in which heat exchange efficiency is maximized by increasing lateral side heat exchange compared to heat exchange in the central region, by forming the outlet located above the flow passage at an incline, wherein the passage induces exhaust gas, that is generated upon actuation of the stirling engine and then heat exchanged by passing through a latent heat exchanger, to be emitted into the atmosphere.

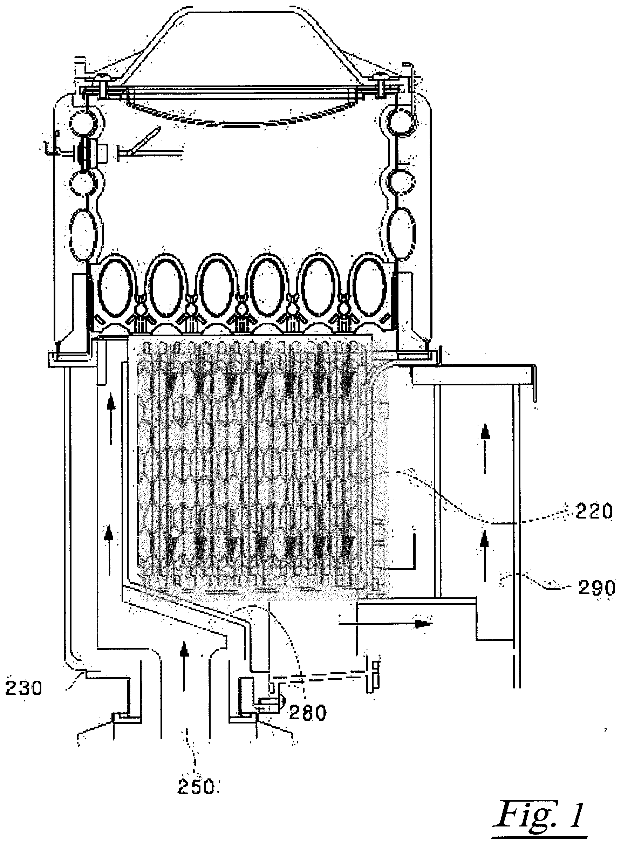

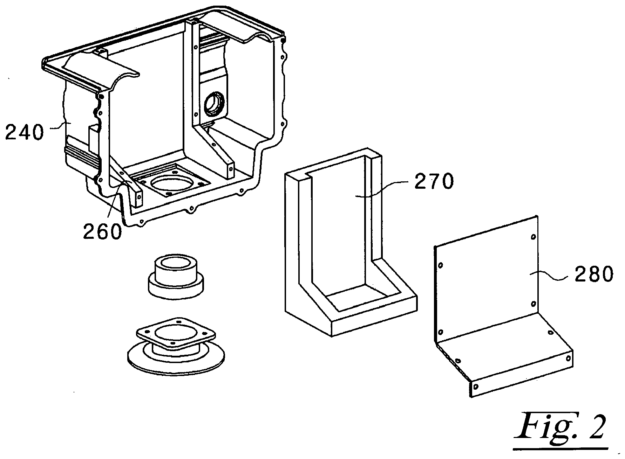

However, as illustrated in Figures 1 and 2, the emission structure of an exhaust passage in a micro combined heat and power system disclosed in the aforementioned patent literature does not immediately emit the engine exhaust gas, but is instead configured to increase heat efficiency by inducing the engine exhaust gas towards the upper portion of the latent heat exchanger (220), then emitting it after passing it through the latent heat exchanger (220) to the lower portion thereof, thereby recovering high temperature waste heat included in the exhaust gas. However, long term use results in inadequate heat exchange because heat is inducted to the insulator (270) and the sealing member (280).

That is, adequate heat exchange does not occur since the exhaust gas which has its heat collected by passing through the latent heat exchanger (220) is transported again to the lateral side of the communication pipe (250), through which heat is transferred again to the exhaust gas.

The present invention has been made to solve the above-described problem occurring in the prior art, and an object of the present invention is to provide a latent heat exchanger cover with a cooling line, wherein the cooling line through which cooling water can flow is formed between the exhaust gas that has passed through the latent heat exchanger and the communication pipe formed on the lateral side, thereby increasing insulation and minimizing heat loss of the fluid transported to the communication pipe.

### [Technical solution]

The present invention, which aims to solve the above-described problem, is directed to a micro combined heat and power system comprising a stirling engine heated by an engine burner to produce electricity, and an auxiliary boiler installed above the stirling engine and consisting of a sensible heat exchanger and a latent heat exchanger to produce hot water. The exhaust gas which heats the stirling engine moves by passing through the communication pipe and the lateral side of the latent heat exchanger, and then undergoes heat exchange while flowing from the upper portion to the lower portion of the latent heat exchanger. A cooling line through which cooling water can flow is created on one side of the cover enclosing the latent heat exchanger, in order to prevent heat created in the communication pipe from being transferred to the exhaust gas that has undergone heat exchange by passing through the latent heat exchanger.

In one embodiment, the cooling line is characterized by being integrally formed with the cover.

### [Advantageous Effects]

Using the latent heat exchanger cover provided with a cooling line according to the present invention, high temperature exhaust gas that has heated the stirling engine will not lose heat to the low temperature exhaust gas emitted when passing through the communication pipe. Therefore, heat loss is reduced, resulting in increased heat efficiency of the auxiliary boiler simultaneously with insulating the communication pipe by preventing heat exchange between the communication pipe and the emission passage of the exhaust gas.

### [Description of the Drawings]

**FIG. 1** and **FIG. 2** are views showing the prior art.
**FIG. 3** is a schematic view showing emission process of the stirling engine exhaust gas in a micro combined heat and power system equipped with a latent heat exchanger cover with the cooling line according to the present invention.
**FIG. 4** is a perspective view showing the auxiliary boiler configured in FIG. 3.
**FIG. 5** is a sectional view showing the engine exhaust passage of FIG. 4.
**FIG. 6** is a partially enlarged section view showing the cooling line provided in FIG 5.

### [Best Mode]

Hereinafter, exemplary embodiment of the present invention will be described with reference to the accompanying drawings. The embodiment of the present invention can be modified into various forms, and it should be understood that the scope of present invention is not limited to the embodiment whose detailed description is provided below. The following embodiment is given to provide a more detailed description of the preset invention to those skilled in the art. Therefore, shapes of the elements may be exaggerated in the drawings for a clearer understanding of the description. Identical or corresponding elements in each drawing are designated with same reference signs. In addition, description of known functions or configurations determined to hinder understanding of the invention is omitted.

An exemplary embodiment of the latent heat exchanger cover provided with a cooling line will be described in detail with reference to the accompanying drawings. For the configurations of the present invention corresponding to those of the prior art, identical reference signs will be used.

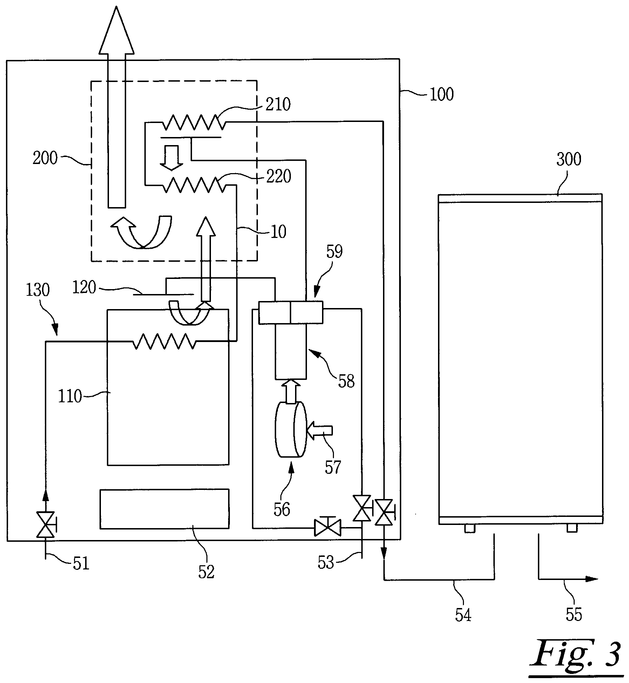

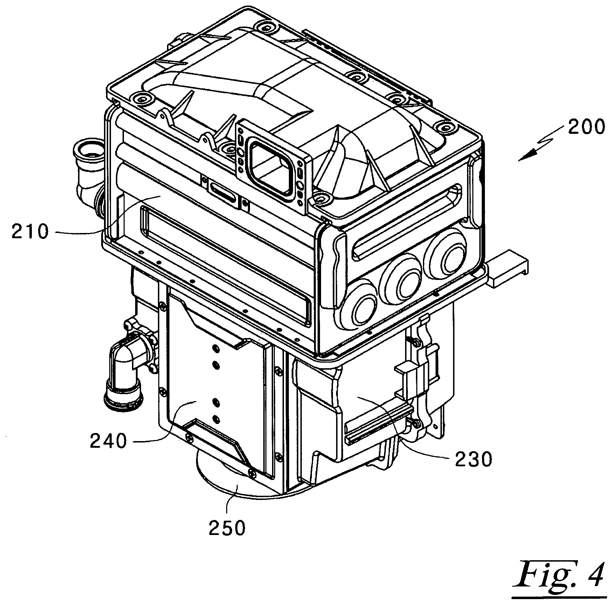

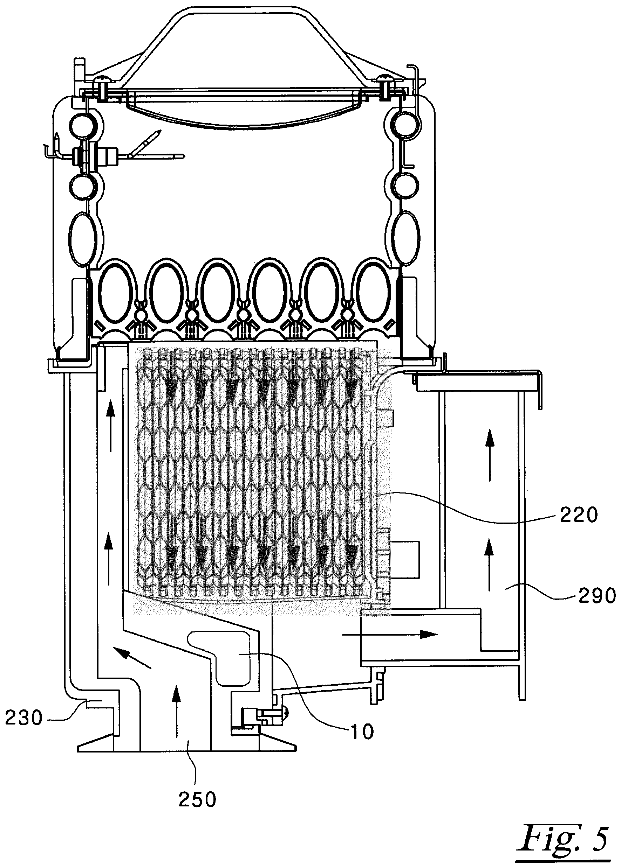

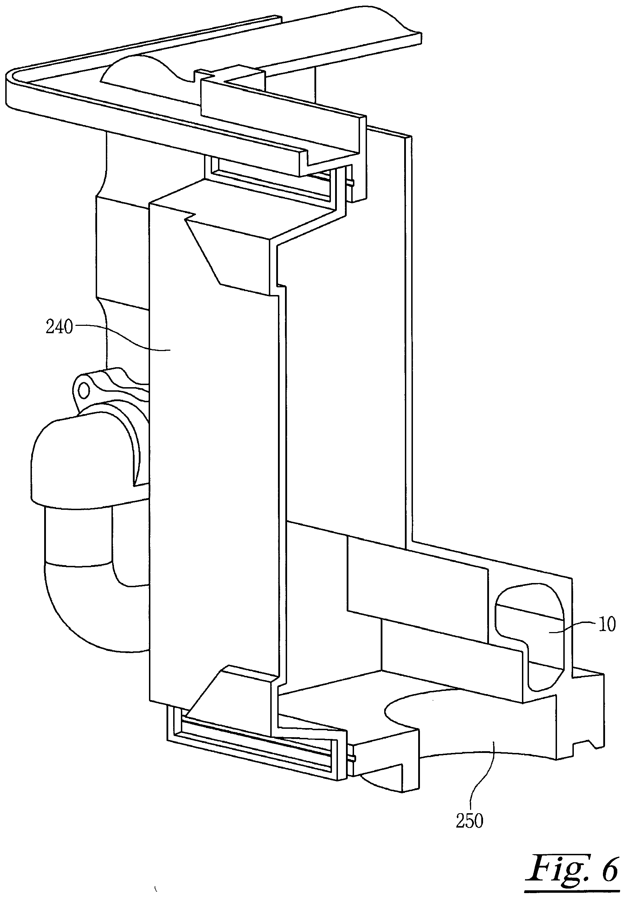

In the accompanying drawings, FIG. 3 is a mimetic diagram showing emission process of a stirling engine exhaust gas in a micro combined heat and power system equipped with a latent heat exchanger cover with the cooling line according to the present invention, FIG. 4 is a perspective view showing the auxiliary boiler configured in FIG. 3, FIG. 5 is a section view showing the engine exhaust passage of FIG. 4, and FIG. 6 is a partially enlarged section view showing the cooling line provided in FIG. 5.

Referring to FIG. 3 and FIG. 4, the micro combined heat and power system comprises a housing (100), wherein a stirling engine (110) is installed in the housing (100), and an auxiliary boiler (200) is installed above the stirling engine (110).

Here, the stirling engine (110) is operated by a main boiler (not shown), and an engine burner (120) equipped in the main boiler heats the engine head (not shown) of the stirling engine (110), causing the working fluid sealed within the main boiler to expand and contract via the temperature difference, thereby producing alternating current.

The auxiliary boiler (200) comprises a sensible heat exchanger (210) and a latent heat exchanger (220), and produces hot water by the high temperature heat exchange provided through a flat plate type burner.

The hot water produced through this process is used after being stored in a storage tank (300), in which case a cooling water pipe (130) is configured to pass through the stirling engine (110), then through the latent heat exchanger (220) and the sensible heat exchanger (210) in order to cool the stirling engine (110).

Meanwhile, the auxiliary boiler (200) has a latent heat exchanger (220) built in the case (230), and a sensible heat exchanger (210) is assembled above the case (230).

Moreover, the front portion of the case (230) is partially open, and the open portion is sealed by a cover (240) forming the passage of the engine exhaust gas.

Here, a hole (not shown) is formed on the underside of the cover (240), and a communication pipe (250) is connected to the hole. The communication pipe (250) is interfaced to the engine head of the stirling engine (110) to carry out the function of inducing emission of the exhaust gas that is combusted from the engine burner (120) and then exhausted after heating the stirling engine (110). Also, the flange shape of the communication pipe permits easy assembly.

Hereinafter, the latent heat exchange cover with a cooling line of the present invention provided in the auxiliary boiler of the micro combined heat and power system as constructed above will be described in detail.

Referring to FIG. 4 to FIG. 6, the latent heat exchange cover with a cooling line of the present invention is provided with a cooling line (10) integrally formed with the latent heat exchanger cover (240) on the lateral side of the communication pipe (250) through which cooling water can flow, such that the communication pipe (250) is interposed between the front surface of the cover (240) and the cooling line (10). The cooling line (10) is configured to allow separate cooling water to flow through, but it is preferable to have the cooling line manufactured integrally with the cover (240) in a water jacket shape, as illustrated in FIG. 6.

Therefore, in the present invention, a separate cooling line is formed within the cover (240), in the region in contact with the communication pipe (250), to form a passage inducing the exhaust gas discharged through the upper portion of the communication pipe (250) to the latent heat exchanger (220). Thereby, it acts as an insulator by which high temperature heat of the exhaust gas flowing in to the communication pipe (250) is prevented from being transferred to the exhaust gas already discharged through the latent heat exchanger (220). In this way, heat loss of the exhaust gas passing through the communication pipe (250) is minimized.

In the aforementioned prior art, heat loss of the exhaust gas passing through the communication pipe (250) can be prevented at the beginning of the operation of the micro combined heat and power system using an insulator (270) and a sealing member (280) (Refer to FIG. 2). However, the insulator (270) and the sealing member (280) are overheated upon long term use, which prevents effective insulation.

The above description relates to a preferred embodiment of a heat exchanger cover provided with a cooling line according to the present invention. It will be understood by the skilled person in the art that various modifications and other similar embodiments based on the description provided can be made. Therefore, it is clear that the present invention is not limited to the referred embodiment. Accordingly, the scope of the invention to be protected must be based on the technical principles of the accompanying claims. Further, it must be understood that various modifications, additions and substitutions are possible, without departing from the scope and spirit of the invention as disclosed in the accompanying claims.

### List of reference numerals

- 10: cooling line
- 51: Return line
- 52: Control unit
- 53: Gas Line
- 54: Flow Line
- 55: Hot Water Line
- 56: Fan
- 57: Air
- 58: Spool Valve
- 59: Venturi (Mixer)
- 100: housing
- 110: stirling engine
- 120: engine burner
- 130: cooling water pipe
- 200: auxiliary boiler
- 210: sensible heat exchanger
- 220: latent heat exchanger
- 230: case
- 240: cover
- 250: communication pipe
- 270: insulator
- 280: sealing member
- 290: Emission Passage
- 300: storage tank

## Claims

1. A latent heat exchanger cover provided in a micro combined heat and power system, the micro combined heat and power system comprising a stirling engine (110) that is heated by an engine burner (120) to produce electricity, and an auxiliary boiler (200) provided above the stirling engine (110) and equipped with a sensible heat exchanger (210) and a latent heat exchanger (220) to produce hot water,
wherein an exhaust gas which has heated the stirling engine (110) passes through a communication pipe (250) having a lateral side of the latent heat exchanger (220), then undergoes heat exchange as it flows from the upper portion to the lower portion of the latent heat exchanger (220),
**characterized in that** a cooling line (10) through which cooling water can flow is provided in a region in contact with the communication pipe (250) within the cover (240) enclosing the latent heat exchanger (220) to prevent heat of the exhaust gas that has flown into the communication pipe (250) and has not yet passed through the latent heat exchanger (220) from being transferred to the exhaust gas that has undergone heat exchange by passing through the latent heat exchanger (220).

2. The latent heat exchanger cover as claimed in claim 1,
**characterized in that** the cooling line (10) is integrally formed with the cover (240).

## Patentansprüche

1. Latent-Wärmetauscher-Gehäuse eines Kraft-WärmeKopplungs-Systems, wobei das Kraft-Wärmekopplungs-System einen Sterlingmotor (110) aufweist, welcher von einem Motorbrenner (120) erwärmt wird, um elektrischen Strom zu erzeugen, wobei oberhalb des Sterlingmotors (110) ein Hilfsboiler (200) vorgesehen ist, welcher mit einem Wärmetauscher (210) für sensible Wärme und einem Latent-Wärmetauscher (220) ausgerüstet ist, um Warmwasser zu erzeugen, wobei ein Abgas, welches den Sterlingmotor (110) erwärmt hat, durch eine kommunizierende Leitung (250) geführt wird, die eine Querseite des Latent-Wärmetauschers (220) bildet, wobei das Abgas durch Strömung von einem oberen Teil zu einem unteren Teil des Latent-Wärmetauschers (220) einem Wärmetauschvorgang unterworfen wird, **dadurch gekennzeichnet, dass** eine Kühlleitung (10), durch welche Kühlwasser fließen kann, in einem Bereich innerhalb des Gehäuses (240), welches den Latent-Wärmetauscher (220) umgibt, in Kontakt mit der kommunizierenden Leitung (250) steht, um zu verhindern, dass Wärme des Abgases, welches in die kommunizierende Leitung (250) eingeströmt ist und den Latent-Wärmetauscher (220) noch nicht passiert hat, zum Abgas geleitet wird, welches dem Wärmetauschvorgang bereits durch Passieren des Latent-Wärmetauschers (220) unterworfen wurde.

2. Latent-Wärmetauscher-Gehäuse nach Anspruch 1, **dadurch gekennzeichnet, dass** die Kühlleitung (10) einstückig mit dem Gehäuse (240) geformt ist.

## Revendications

1. Couvercle d'échangeur de chaleur latente prévu dans un système de micro-production conjointe de chauffage et de puissance, le système de micro-production conjointe de chauffage et de puissance comprenant un moteur Stirling (110) chauffé par un brûleur de moteur (120) pour produire de l'électricité, et une chaudière auxiliaire (200) prévue au-dessus du moteur Stirling (110) et équipée d'un échangeur de chaleur sensible (210) et d'un échangeur de chaleur latente (220) pour produire de l'eau chaude,
un gaz d'échappement ayant chauffé le moteur Stirling (110) passant à travers un tuyau de communication (250) qui a un côté latéral de l'échangeur de chaleur latente (220), puis étant soumis à un échange thermique à mesure qu'il s'écoule depuis la partie supérieure jusqu'à la partie inférieure de l'échangeur de chaleur latente (220),
**caractérisé en ce qu'**une conduite de refroidissement (10) à travers laquelle de l'eau de refroidissement peut s'écouler est prévue dans une région en contact avec le tuyau de communication (250) à l'intérieur du couvercle (240) renfermant l'échangeur de chaleur latente (220) pour empêcher que la chaleur du gaz d'échappement qui s'est écoulé dans le tuyau de communication (250) et n'est pas encore passé à travers l'échangeur de chaleur latente (220) ne soit transférée au gaz d'échappement qui a été soumis à un échange thermique en passant à travers l'échangeur de chaleur latente (220).

2. Couvercle d'échangeur de chaleur latente selon la revendication 1,
**caractérisé en ce que** la conduite de refroidissement (10) est formée intégralement avec le couvercle (240).
